# EUROPÄISCHE PATENTSCHRIFT

(11) **EP 3 152 521 B1**
(45) Veröffentlichungstag und Bekanntmachung des Hinweises auf die Patenterteilung: **12.08.2020**
(21) Anmeldenummer: 15733611.6
(22) Anmeldetag: 06.05.2015
(51) Int. Cl.: G01C 21/30, G01C 21/36, G01S 5/16

(54) **VERFAHREN UND SYSTEM ZUR BESTIMMUNG EINER FAHRZEUGPOSITION**
METHOD AND SYSTEM FOR DETERMINING THE POSITION OF A VEHICLE
PROCÉDÉ ET SYSTÈME DE DÉTERMINATION DE LA POSITION D'UN VÉHICULE

(30) Priorität: 05.06.2014 DE 102014210770
(43) Veröffentlichungstag der Anmeldung: 12.04.2017
(73) Patentinhaber: Conti Temic microelectronic GmbH, 90411 Nürnberg (DE)
(72) Erfinder: FECHNER, Thomas, 88142 Wasserburg (DE); HEINRICH, Stefan, 77855 Achern (DE); HEGEMANN, Stefan, 88239 Wangen (DE); GREWE, Ralph, 65933 Frankfurt am Main (DE)
(86) Internationale Anmeldenummer: PCT/DE2015/200300
(87) Internationale Veröffentlichungsnummer: WO 2015/185048

(56) Entgegenhaltungen:
- WO-A1-2010/127650
- DE-A1-102007 003 014
- DE-A1-102010 033 729
- DE-A1-102011 082 379
- US-A1- 2014 005 932

## Beschreibung

Die Erfindung betrifft ein Verfahren und ein System zur genauen Bestimmung einer Fahrzeugposition eines Fahrzeuges, insbesondere eines Straßenfahrzeuges.

Straßenfahrzeuge werden zunehmend mit Fahrerassistenzsystemen ausgerüstet. Ein Fahrerassistenzsystem unterstützt den Fahrer durch verschiedene Assistenzfunktionen beim Fahren des Fahrzeuges. Hochautomatisiertes Fahren bezeichnet einen Zwischenschritt zwischen assistiertem Fahren, bei dem der Fahrer durch eine Funktion des Fahrerassistenzsystems unterstützt wird, und dem vollständig autonomen Fahren, bei dem das Fahrzeug selbsttätig ohne Einwirkung des Fahrers fährt. Beim hochautomatisierten Fahren verfügt das Fahrzeug über ein System, das vorausplant und die Fahraufgabe zumindest in den meisten Fahrsituationen übernehmen kann. Hierbei arbeiten der Fahrer und das System zusammen, wobei der Fahrer bestimmt, wie stark das System in das Fahrverhalten eingreift.

Für ein hochautomatisiertes Fahren ist es in vielen Fällen notwendig, die Fahrzeugposition des Fahrzeuges sehr genau zu bestimmen. Herkömmliche Fahrzeuge erhalten in vielen Fällen Positionsdaten über eine GPS-Einheit. Darüber hinaus können diese Positionsdaten mithilfe eines zur Verfügung stehenden Mobilfunknetzes aufbereitet werden. Jedoch erlaubt diese herkömmliche Vorgehensweise lediglich eine Positionsbestimmung eines Fahrzeuges mit einer Genauigkeit bzw. Auflösung von etwa 5 bis 50 m. Diese Genauigkeit der Positionsbestimmung reicht jedoch für eine hochautomatisierte Fahrfunktion des Fahrzeuges nicht aus.

Die US 2014/005932 A1 beschreibt eine zusätzliche Hardware die unter einem Auto abgebracht wird um die Fahrzeugposition zu bestimmen. Die DE 10 2007 003014 A1 beschreibt eine laterale Positionierung eines Fahrzeugs. Die DE 10 2010 033729 Al beschreibt die Positionierung eines Fahrzeugs anhand einer reinen Linienerkennung. Die DE 10 2011 082379 A1 beschreibt, die Erkennung relativer Merkmale. Die WO 2010 / 127650 A1 zeigt ein Verfahren zur Auswertung von Sensordaten für ein Kraftfahrzeug.

Es ist eine Aufgabe der vorliegenden Erfindung, ein Verfahren und ein System zur Bestimmung einer Fahrzeugposition eines Fahrzeuges zu schaffen, bei der die Positionsbestimmung des Fahrzeuges derart genau ist, dass eine hochautomatisierte Fahrfunktion durchgeführt werden kann.

Diese Aufgabe wird erfindungsgemäß durch ein Verfahren mit den in Patentanspruch 1 angegebenen Merkmalen gelöst.

Bei einer möglichen Ausführungsform des erfindungsgemäßen Verfahrens werden die Sensordaten durch mindestens eine Sensoreinheit des Fahrzeuges während einer Fahrt über den Fahrboden erzeugt.

Bei einer möglichen Ausführungsform des erfindungsgemäßen Verfahrens umfassen die Sensordaten Kamerabilder, die von mindestens einer Fahrzeugkamera des Fahrzeuges während der Fahrt des Fahrzeuges über den Fahrboden erfasst werden.

Bei einer weiteren möglichen Ausführungsform des erfindungsgemäßen Verfahrens wird aus den durch die Sensoreinheiten erfassten Sensordaten mindestens ein Belegungsgitter des Fahrbodens in Echtzeit berechnet.

Bei einer ersten möglichen Ausführungsform des erfindungsgemäßen Verfahrens werden die erfassten Sensordaten über eine drahtlose Schnittstelle an einen Backend-Server übertragen, welcher die Bodenmerkmale aus den über die Schnittstelle empfangenen Sensordaten extrahiert und anhand der extrahierten Bodenmerkmale mittels der Merkmalskarte die aktuelle Fahrzeugposition des Fahrzeuges bestimmt.

Bei einer zweiten möglichen Ausführungsform des erfindungsgemäßen Verfahrens werden die durch eine Datenverarbeitungseinheit des Fahrzeuges extrahierten Bodenmerkmale des Fahrbodens über eine drahtlose Schnittstelle an einen Backend-Server übertragen, welcher anhand der über die Schnittstelle empfangenen Bodenmerkmale mittels der Merkmalskarte die aktuelle Fahrzeugposition des Fahrzeuges bestimmt.

Bei einer weiteren möglichen Ausführungsform des erfindungsgemäßen Verfahrens meldet der Backend-Server die durch ihn bestimmte aktuelle Fahrzeugposition des Fahrzeuges über die Schnittstelle an das Fahrzeug zurück.

Bei einer weiteren möglichen Ausführungsform des erfindungsgemäßen Verfahrens werden die durch eine Datenverarbeitungseinheit des Fahrzeuges extrahierten Bodenmerkmale des Fahrbodens zur Bestimmung der aktuellen Fahrzeugposition des Fahrzeuges mit den Bodenmerkmalen verglichen, die von einem Backend-Server aus der Merkmalskarte entnommen und über eine drahtlose Schnittstelle an die Datenverarbeitungseinheit des Fahrzeuges übertragen werden.

Bei einer weiteren möglichen Ausführungsform des erfindungsgemäßen Verfahrens wird die aktuelle Fahrzeugposition des Fahrzeuges anhand der extrahierten Bodenmerkmale mittels der Merkmalskarte in einem eingeschränkten Suchraum bestimmt.

Bei einer weiteren möglichen Ausführungsform des erfindungsgemäßen Verfahrens wird der Suchraum in der Merkmalskarte durch eine grobe Bestimmung der Fahrzeugposition des Fahrzeuges auf Basis von GPS-Signalen, Mobilfunksignalen und/oder Odometrie eingeschränkt.

Bei einer weiteren möglichen Ausführungsform des erfindungsgemäßen Verfahrens hat der Backend-Server Zugriff auf die in einer Datenbank gespeicherte globale Merkmalskarte.

Bei einer weiteren möglichen Ausführungsform des erfindungsgemäßen Verfahrens wird die Merkmalskarte anhand von Sensordaten, die von Fahrzeugen durch den Backend-Server empfangen werden, oder auf Basis von Satellitenbildern generiert und/oder aktualisiert.

Bei einer weiteren möglichen Ausführungsform des erfindungsgemäßen Verfahrens umfassen die aus den Sensordaten und/oder Belegungsgittern extrahierten Bodenmerkmale des Fahrbodens Bodenmarkierungen, insbesondere Fahrstreifen, und Bodenverkehrszeichen,
Bodenfugen, insbesondere Teerfugen,
Fahrbahnrillen, Fahrbodentexturen und/oder Kanaldeckel oder dergleichen.

Bei einer weiteren möglichen Ausführungsform des erfindungsgemäßen Verfahrens umfassen die aus den Sensordaten und/oder Belegungsgittern extrahierten Bodenmerkmale des Fahrbodens allgemeine Kanteninformationen, insbesondere Informationen über Kanten von Leitpfosten, Leitplanken, Häusern und/oder Tunneln und/oder Brücken.

Bei einer weiteren möglichen Ausführungsform des erfindungsgemäßen Verfahrens wird die Fahrzeugposition des Fahrzeuges mit einer Positionsgenauigkeit von bis zu unter 10 cm genau bestimmt.

Die Erfindung schafft ferner ein System zur Bestimmung einer Fahrzeugposition eines Fahrzeuges mit den in Patentanspruch 15 angegebenen Merkmalen.

Im Weiteren werden mögliche Ausführungsformen des erfindungsgemäßen Verfahrens und des erfindungsgemäßen Systems zur Bestimmung einer Fahrzeugposition eines Fahrzeuges unter Bezugnahme auf die beigefügten Figuren näher erläutert.

Es zeigen:
- Fig. 1: ein Ablaufdiagramm zur Darstellung eines Ausführungsbeispiels des erfindungsgemäßen Verfahrens;
- Fig. 2: ein Blockschaltbild zur Darstellung eines Ausführungsbeispiels des erfindungsgemäßen Systems zur Bestimmung einer Fahrzeugposition eines Fahrzeuges;
- Figuren 3, 4, 5: schematische Skizzen zur Darstellung möglicher Ausführungsbeispiele des erfindungsgemäßen Verfahrens und des erfindungsgemäßen Systems zur Bestimmung einer Fahrzeugposition eines Fahrzeuges;
- Fig. 6: ein Diagramm zur Darstellung eines weiteren Ausführungsbeispiels des erfindungsgemäßen Systems zur Bestimmung einer Fahrzeugposition eines Fahrzeuges;
- Fig. 7: ein exemplarisches Beispiel zur Darstellung einer Bodenbeschaffenheit auf Rohdatenebene;
- Fig. 8: die aus den in Fig. 7 extrahierten Bodenmerkmale des Fahrbodens, wie sie bei dem erfindungsgemäßen Verfahren und System verwendet werden können.

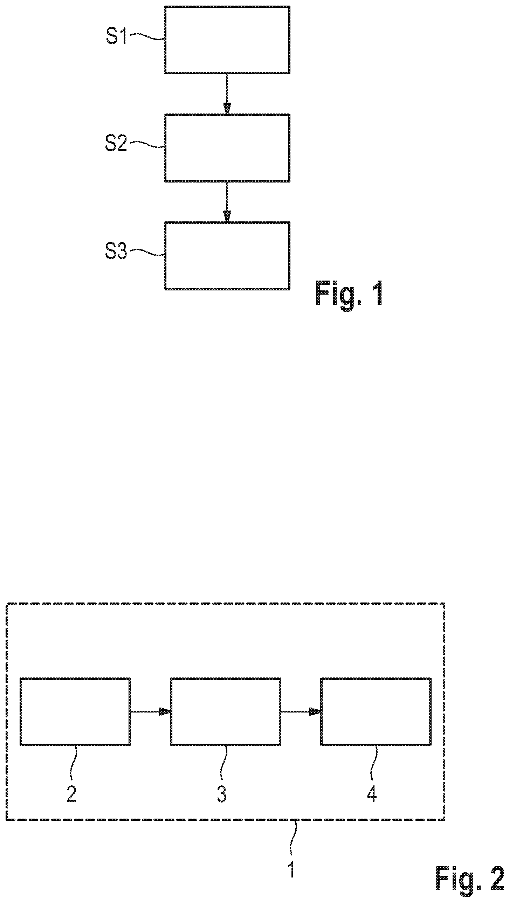

Wie man in Fig. 1 erkennen kann, umfasst das erfindungsgemäße Verfahren zur Bestimmung einer Fahrzeugposition eines Fahrzeuges bei dem dargestellten Ausführungsbeispiel mehrere Schritte. In einem ersten Schritt S1 werden Sensordaten eines von dem Fahrzeug befahrenen Fahrbodens erfasst. Bei dem Fahrzeug handelt es sich vorzugsweise um ein Straßenfahrzeug, insbesondere einen Pkw oder Lkw. Das Fahrzeug bewegt sich auf einem Fahrboden, beispielsweise einer geteerten Straße oder einem Kiesweg. Die Sensordaten werden durch mindestens eine Sensoreinheit des Fahrzeuges während der Fahrt über den Fahrboden erzeugt. Dabei können die Sensordaten Kamerabilder umfassen, die von mindestens einer Fahrzeugkamera während der Fahrt des Fahrzeuges über den Fahrboden erfasst werden. Bei einer möglichen Ausführungsform werden die erfassten Sensordaten in einem Zwischenspeicher zur weiteren Datenverarbeitung zwischengespeichert.

In einem weiteren Schritt S2 werden die Bodenmerkmale des Fahrbodens aus den erfassten Sensordaten oder aus Belegungsgittern, die auf Basis der Sensordaten berechnet werden, extrahiert. Bei einer möglichen Ausführungsform werden sogenannte Occupancy Grids bzw. Belegungsgitter des Fahrbodens aus den erfassten Sensordaten berechnet und zwischengespeichert. Bei einer möglichen Ausführungsform werden anschließend Bodenmerkmale des Fahrbodens aus diesen Belegungsgittern extrahiert. Alternativ erfolgt die Extrahierung der Bodenmerkmale des Fahrbodens direkt aus den erfassten Sensorrohdaten. Bei einer weiteren möglichen Ausführungsform erfolgt die Extrahierung der Bodenmerkmale im Schritt S2 sowohl aus erfassten Sensordaten als auch aus zwischengespeicherten Belegungsgittern, die auf Basis der Sensordaten berechnet wurden. Bei den Sensordaten kann es sich um Kamerabilder handeln. Darüber hinaus kann es sich bei den Sensordaten auch um andere Arten von Sensordaten handeln, beispielsweise Radardaten oder Daten, die von einem Lidarsystem generiert werden.

In einem weiteren Schritt S3 des in Fig. 1 dargestellten Ausführungsbeispiels wird die aktuelle Fahrzeugposition des Fahrzeuges anhand der extrahierten Bodenmerkmale mittels einer Merkmalskarte bestimmt.

Das Erfassen der Sensordaten im Schritt S1 erfolgt durch Sensoreinheiten des Fahrzeuges, insbesondere Fahrzeugkameras, welche Kamerabilder generieren. Die Extrahierung von Bodenmerkmalen des Fahrbodens aus den erfassten Sensordaten oder aus zwischengespeicherten Belegungsgittern, die auf Basis der Sensordaten berechnet werden, erfolgt durch eine Berechnungs- bzw. Datenverarbeitungseinheit. Bei einer möglichen Ausführungsform handelt es sich hierbei um eine Datenverarbeitungseinheit innerhalb des Fahrzeuges. Bei einer alternativen Ausführungsform kann sich die Datenverarbeitungseinheit zur Extrahierung der Bodenmerkmale in einem Server befinden, der über eine drahtlose Schnittstelle mit einem Transceiver des Fahrzeuges verbunden ist. Bei dieser Ausführungsform können die in Schritt S1 erfassten Sensordaten über die drahtlose Schnittstelle an den Backend-Server übertragen werden, welche die Bodenmerkmale aus den über die Schnittstelle empfangenen Sensordaten extrahiert und anhand der extrahierten Bodenmerkmale mittels der Merkmalskarte die aktuelle Fahrzeugposition des Fahrzeuges bestimmt. Hierzu hat der Backend-Server bzw. dessen Datenverarbeitungseinheit Zugriff auf einen Speicher, auf dem sich eine Merkmalskarte befindet. Anschließend meldet der Backend-Server die durch ihn bestimmte aktuelle Fahrzeugposition des Fahrzeuges über die drahtlose Schnittstelle an das Fahrzeug zurück.

Bei einer alternativen Ausführungsform erfolgt die Extrahierung der Bodenmerkmale durch eine Datenverarbeitungseinheit des Fahrzeuges und die Bestimmung der aktuellen Fahrzeugposition durch eine Datenverarbeitungseinheit eines Backend-Servers. Bei dieser Ausführungsform werden zunächst im Schritt S2 durch eine Datenverarbeitungseinheit des Fahrzeuges Bodenmerkmale des Fahrbodens extrahiert und die extrahierten Bodenmerkmale anschließend über die drahtlose Schnittstelle des Fahrzeuges an einen Backend-Server übertragen. Eine Datenverarbeitungseinheit des Backend-Servers bestimmt anschließend anhand der über die drahtlose Schnittstelle empfangenen Bodenmerkmale mittels einer gespeicherten Merkmalskarte die aktuelle Fahrzeugposition des Fahrzeuges und meldet diese über die drahtlose Schnittstelle zurück an das Fahrzeug.

Bei einer weiteren möglichen Ausführungsform des erfindungsgemäßen Verfahrens werden die durch eine Datenverarbeitungseinheit des Fahrzeuges extrahierten Bodenmerkmale des Fahrbodens zur Bestimmung der aktuellen Fahrzeugposition des Fahrzeuges mit den Bodenmerkmalen verglichen, die von dem Backend-Server aus der Merkmalskarte entnommen und über eine drahtlose Schnittstelle an die Datenverarbeitungseinheit des Fahrzeuges übertragen werden.

Die Bestimmung der aktuellen Fahrzeugposition des Fahrzeuges anhand der extrahierten Bodenmerkmale in Schritt S3 erfolgt mittels einer Merkmalskarte. Dabei wird vorzugsweise die aktuelle Fahrzeugposition des Fahrzeuges anhand der extrahierten Bodenmerkmale mittels der Merkmalskarte in einem eingeschränkten Suchraum bestimmt. Hierdurch kann der Rechenaufwand bzw. die Rechenzeit deutlich reduziert werden. Neben einer Reduktion der Rechenzeit führt darüber hinaus die Einschränkung auf einen Suchraum zu weniger Mehrdeutigkeiten. Bei einer bevorzugten Ausführungsform wird der Suchraum in der Merkmalskarte durch eine grobe Bestimmung der Fahrzeugposition des Fahrzeuges auf Basis von GPS-Signalen, Mobilfunksignalen oder durch Odometrie eingeschränkt. Ein Problem bei der Bestimmung der Fahrzeugposition mittels Landmarken bzw. Bodenmerkmalen stellen Mehrdeutigkeiten dar, d.h., es gibt verschiedene Stellen im Straßennetz, die eine gleiche Konfiguration von Landmarken bzw. Bodenmerkmalen aufweisen können. Durch die grobe Bestimmung der Fahrzeugposition des Fahrzeuges auf Basis von GPS-Signalen oder einer kontinuierlichen Positionsbestimmung mittels Odometrie kann der Suchraum in der Merkmalskarte eingeschränkt werden, sodass es zu weniger Mehrdeutigkeiten kommt.

Die Merkmalskarte wird vorzugsweise anhand von Sensordaten, die von Fahrzeugen durch den Backend-Server empfangen werden, oder auf Basis von Satellitenbildern generiert und vorzugsweise ständig aktualisiert. Mögliche Marken bzw. Bodenmerkmale umfassen Bodenmarkierungen, insbesondere Fahrstreifen, sowie Bodenverkehrszeichen, Bodenfugen, insbesondere Teerfugen, Fahrbahnrillen, Fahrbodentexturen oder farbliche Veränderungen des Bodens sowie strukturelle Einheiten wie beispielsweise Kanaldeckel oder dergleichen.

Erfindungsgemäße Marken bzw. Bodenmerkmale umfassen allgemeine Kanteninformationen. Allgemeine Kanteninformationen können dabei z.B. mittels geeigneter Bildverarbeitungsoperatoren aus einem Kamerabild extrahierte Kanteninformationen sein. Diese Kanteninformationen weisen Informationen über Kanten von Leitpfosten, Leitplanken, Häusern, Tunneln, Brücken auf. Zusätzlich mögliche Marker bzw. Bodenmerkmale umfassen Bodenmarkierungen, insbesondere Fahrstreifen, sowie Bodenverkehrszeichen, Bodenfugen, insbesondere Teerfugen, Fahrbahnrillen, Fahrbodentexturen oder farbliche Veränderungen des Bodens sowie strukturelle Einheiten wie beispielsweise Kanaldeckel oder dergleichen.

Unter dem Begriff Bodenmerkmale sind folglich nicht nur Merkmale zu verstehen, die direkt aus dem Boden unter oder vor dem Fahrzeug gewonnen werden. Vielmehr sind unter dem Begriff Bodenmerkmale alle Merkmale zu verstehen, die ortsfest gegenüber dem Boden sind. Die Kanteninformationen können zusätzlich auch Informationen über beliebige andere Kanten, z.B. die Umrisskanten von Bergen oder dergleichen aufweisen. Als mögliche Bildverarbeitungsoperatoren zur Extraktion der Kanten aus einem Kamerabild eignen sich bekannte Operatoren wie Sobel oder Canny.

Mit dem erfindungsgemäßen Verfahren, wie es in dem Ausführungsbeispiel gemäß Fig. 1 dargestellt ist, kann die Fahrzeugposition des Fahrzeuges mit einer Positionsgenauigkeit von bis zu unter 10 cm genau bestimmt werden.

Fig. 2 zeigt ein Blockdiagramm zur Darstellung eines Ausführungsbeispiels eines erfindungsgemäßen Systems 1 zur Bestimmung einer Fahrzeugposition eines Fahrzeuges. Bei dem in Fig. 2 dargestellten Ausführungsbeispiel enthält das System 1 mindestens eine Sensoreinheit 2, die Sensordaten eines von dem Fahrzeug befahrenen Fahrbodens liefert. Bei dem Fahrboden handelt es sich beispielsweise um eine Verkehrsstraße oder einen sonstigen befahrbaren Weg. Das System 1 verfügt ferner über eine Extrahierungseinheit 3, die Bodenmerkmale aus den erfassten Sensordaten direkt oder indirekt aus zwischengespeicherten Belegungsgittern, die auf Basis der empfangenen Sensordaten berechnet worden sind, extrahiert. Eine Berechnungseinheit 4 bestimmt eine aktuelle Fahrzeugposition des Fahrzeuges anhand der extrahierten Bodenmerkmale mittels einer gespeicherten Merkmalskarte. Dabei liefert die Berechnungseinheit die Fahrzeugposition des Fahrzeuges mit einer Positionsgenauigkeit von bis zu unter 10 cm genau. Diese genaue Fahrzeugposition kann bei einer möglichen Ausführungsform durch ein Fahrerassistenzsystem des Fahrzeuges verwendet werden, welches eine oder mehrere hochautomatisierte Fahrfunktionen HAF zur Verfügung stellt.

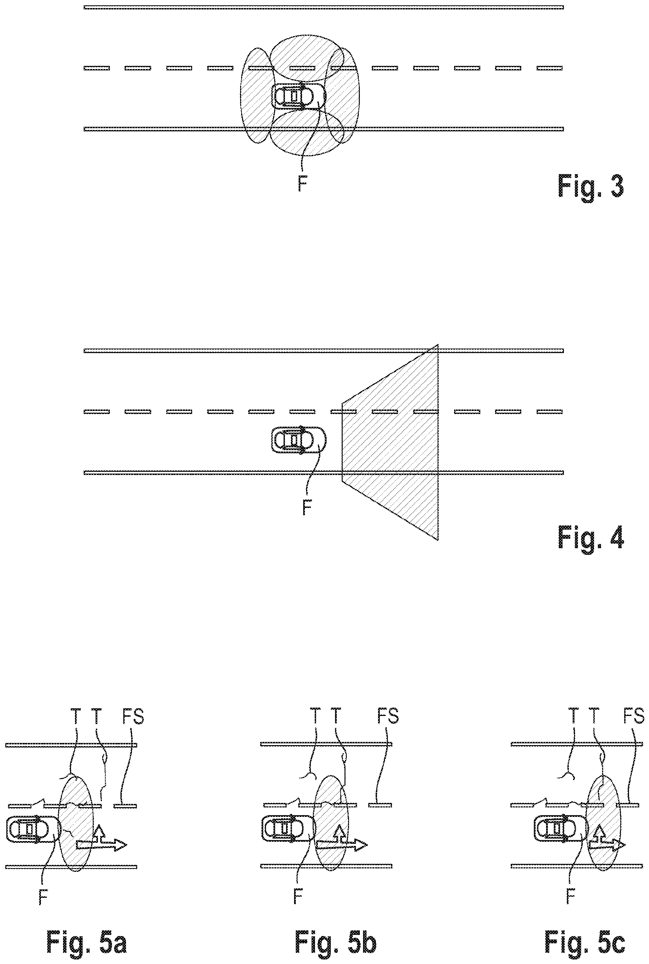

Die Figuren 3, 4, 5 dienen zur Erläuterung der Funktionsweise des erfindungsgemäßen Systems und des erfindungsgemäßen Verfahrens zur genauen Bestimmung der Fahrzeugposition eines Fahrzeuges.

Fig. 3 zeigt ein Fahrzeug F, welches sich auf einer zweispurigen Straße bewegt. Das Fahrzeug F verfügt beispielsweise über das in Fig. 2 dargestellte System 1 zur Bestimmung seiner Fahrzeugposition. Bei dem in Fig. 3 dargestellten Ausführungsbeispiel verfügt das Fahrzeug F ferner über ein Surround-View-System, welches Umgebungsbilder der Fahrzeugumgebung liefert. Dieses Surround-View-System verfügt über mehrere Fahrzeugkameras, die an verschiedenen Stellen an der Karosserie des Fahrzeuges angebracht sein können. Bei dem in Fig. 3 dargestellten Beispiel verfügt das Fahrzeug F über vier verschiedene Fahrzeugkameras, die Kamerabilder liefern, welche Ausschnitte des in der Nähe des Fahrzeuges F befindlichen Fahrbodens darstellen. Bei dem in Fig. 3 dargestellten Beispiel können beispielsweise als Bodenmerkmale Fahrstreifen zwischen den beiden Fahrspuren der Straße dienen, welche durch das erfindungsgemäße System 1 als Bodenmerkmale des Fahrbodens extrahiert werden können. Weiterhin können als Bodenmarkierungen Seitenstreifen der Fahrbahn dienen.

Fig. 3 zeigt einen Erfassungsbereich auf der Straße mittels eines Top-View-Systems.

Fig. 4 zeigt den Erfassungsbereich zur Erfassung von Bodenmerkmalen auf einer Straße mithilfe einer Front- bzw. vorderen Fahrzeugkamera des Fahrzeuges F.

Die Figuren 5a, 5b, 5c zeigen beispielhaft mögliche Bodenmerkmale auf der Straße, die durch das erfindungsgemäße Verfahren und System zur Positionsbestimmung der Fahrzeugposition des Fahrzeuges F genutzt werden können. Man erkennt in den Figuren 5a, 5b, 5c, wie sich ein Fahrzeug F auf der Straße nach rechts bewegt, wobei ein Erfassungsbereich einen Ausschnitt des Fahrbodens sukzessive überstreicht. Bei dem in Fig. 5 dargestellten Beispiel umfassen die extrahierbaren Bodenmerkmale des Fahrbodens beispielsweise Teerfugen T sowie Fahrstreifen FS zwischen den beiden Fahrspuren der Straße. Weiterhin können als Bodenmerkmale ein Seitenstreifen der Straße oder Verkehrszeichen dienen, beispielsweise der in Fig. 5 dargestellte Verkehrspfeil. Darüber hinaus können eine Vielzahl weiterer Bodenmerkmale durch das erfindungsgemäße Verfahren extrahiert werden, beispielsweise Fahrbahnrillen, Fahrbodentexturen oder Kanaldeckel und dergleichen.

Die Positionsbestimmung bzw. die Berechnung der Fahrzeugposition kann entweder durch eine Datenverarbeitungseinheit innerhalb des Fahrzeuges erfolgen oder durch eine Datenverarbeitungseinheit eines Backend-Servers. Die Datenverarbeitungseinheiten können einen oder mehrere Mikroprozessoren enthalten und entsprechende Berechnungsprogramme ausführen. Die zur Bestimmung der Fahrzeugposition notwendige Merkmalskarte kann bei einer möglichen Ausführungsform mithilfe von Satellitenbildern erstellt werden. Darüber hinaus kann die Merkmalskarte auch durch Abfahren der Straße bzw. Strecke generiert werden.

Neben Sensordaten bzw. Kamerabildern können für die Bestimmung der Fahrzeugposition auch gitterbasierte Umweltmodelle, insbesondere sogenannte Occupancy Grids bzw. Belegungsgitter, verwendet werden, sofern beispielsweise im Backend-Server eine entsprechende Abbildung des Umfelds bzw. der Umwelt vorliegt. Bei einer möglichen Ausführungsform wird ein durch eine Datenverarbeitungseinheit des Fahrzeuges berechnetes Occupancy Grid bzw. Belegungsgitter regelmäßig über eine drahtlose Schnittstelle an einen Backend-Server übertragen, um die dort vorhandenen Karten zu aktualisieren. Um die neuen Informationen auf Seiten des Backend-Servers einzufügen, ist ein genaues Matching der Fahrzeugkarte in die globale Karte erforderlich. Dafür ist eine genaue Positionsbestimmung erforderlich, die dem Fahrzeug zurückübermittelt werden kann. Ein Vorteil der Verwendung von Belegungsgittern bzw. Occupancy Grids besteht darin, dass sie nicht nur von einer Kamera, sondern auch von weiteren Sensoreinheiten, insbesondere Radarsensoreinheiten, Lidarsensoreinheiten, PMD-Sensoreinheiten oder Ultraschallsensoreinheiten bereitgestellt werden können und somit eine sensorunabhängige Verbesserung der Positionsbestimmung des Fahrzeuges ermöglichen. Ein Vorteil der Berechnung der verbesserten Positionierung im Backend ergibt sich daraus, dass innerhalb des Fahrzeuges kein globales Occupancy Grid bzw. Belegungsgitter mit entsprechend großem Speicherbedarf zur Verfügung gestellt werden muss. Weiterhin können aufwendige Berechnungen für das Matching des Fahrzeug-Grids mit dem globalen Occupancy Grid mithilfe eines leistungsstarken Servers durchgeführt werden. Wie bei einem Bild, insbesondere einem Kamerabild, besteht bei einem Occupancy Grid bzw. Belegungsgitter auch die Möglichkeit, Merkmale, beispielsweise Ecken von Fahrstreifen, zu extrahieren und für eine Positionsbestimmung heranziehen.

Werden die Daten im Backend-Server verarbeitet, können zwei verschiedene Modelle der Übertragung verwendet werden, nämlich entweder die Übertragung der Rohdaten oder die Übertragung von berechneten bzw. extrahierten Merkmalen, beispielsweise "Good Features to Track". Der Backend-Server kann daraufhin die empfangenen Daten auswerten, um festzustellen, wo sich das Fahrzeug genau befindet, da sich aus den Daten bzw. empfangenen Kamerabildern ein relativ eindeutiges Bild ergibt, welches erlaubt, die Position des Fahrzeuges genau zu bestimmen. Um Mehrdeutigkeiten zu vermeiden, kann zudem eine Inertialsensorik und ein GPS-Signal bei der Auswertung der Daten miteinbezogen werden. Hierdurch wird der Suchraum stark verringert. Alternativ zu der Verarbeitung der Daten im Backend-Server kann die Verarbeitung der Daten auch durch eine Datenverarbeitungseinheit bzw. Berechnungseinheit innerhalb des Fahrzeuges erfolgen. Bei dieser Ausführungsvariante werden die Sensordaten mit Daten verglichen, die von dem Backend-Server stammen, um eine genaue Positionsbestimmung zu gewährleisten.

Bei einer möglichen Ausführungsform wird die Straße bzw. Strecke vorher exakt vermessen, sodass eine entsprechende Merkmalskarte zur Verfügung steht. Bei einer möglichen Ausführungsform hat ein Backend-Server Zugriff auf die so generierte Merkmalskarte. Bei der exakten Vermessung der Strecke wird vorzugsweise mit einem hochgenauen GPS-Signal die Position der Bodenmerkmale und/oder der Sensorrohdaten beim Abfahren detektiert und in Bezug zueinander gesetzt.

Das erfindungsgemäße System zur Bestimmung einer Fahrzeugposition kann bei einer möglichen Ausführungsform auch als redundantes System zur Kontrolle einer herkömmlichen Positionsbestimmung genutzt werden, um die eigentliche Positionierung des Fahrzeuges zu überprüfen und um festzustellen, ob im Primärsystem ein Fehler bei der Messung der Position aufgetreten ist. Treten Abweichungen auf und überschreiten ein gewisses Maß, kann bei dieser Ausführungsform das System abgeschaltet werden und der Fahrer übernimmt. Bei dieser Ausführungsform ist das System nicht nur in der Lage, die genaue Position zu bestimmen, sondern kann zusätzlich das Primärsystem kontrollieren.

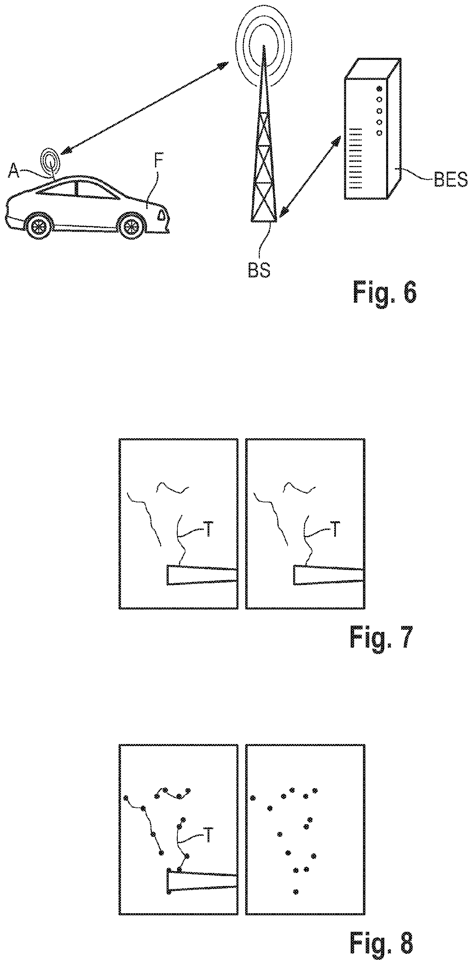

Fig. 6 dient zur Verdeutlichung eines Ausführungsbeispiels des erfindungsgemäßen Systems. Wie in Fig. 6 dargestellt, verfügt das Fahrzeug F über eine Antenne A, die über eine drahtlose Schnittstelle mit der Antenne einer Basisstation BS kommuniziert, die über ein Netzwerk mit einem Backend-Server BES verbunden ist.

Das in Fig. 2 dargestellte System zur Bestimmung der Fahrzeugposition kann auf verschiedene Einheiten verteilt sein. So befindet sich bei einer möglichen Ausführungsform die Sensoreinheit 2 und die Extrahierungseinheit 3 innerhalb des Fahrzeuges F und nur die extrahierten Merkmalen werden über die drahtlose Schnittstelle über die Basisstation BS an den Backend-Server BES geliefert. Der Backend-Server BES verfügt bei dieser Ausführungsvariante über eine Berechnungseinheit 4, die eine aktuelle Fahrzeugposition des Fahrzeuges anhand der erhaltenen extrahierten Bodenmerkmale mittels einer gespeicherten Merkmalskarte bestimmt. Anschließend überträgt der Backend-Server BES die ermittelte genaue Fahrzeugposition des Fahrzeuges über die drahtlose Schnittstelle zurück an das Fahrzeug F.

Bei einer weiteren möglichen Ausführungsvariante werden direkt die von der Sensoreinheit gelieferten Sensorrohdaten über die drahtlose Schnittstelle der Basisstation BS an den Backend-Server BES geliefert. Bei dieser Ausführungsvariante verfügt der Backend-Server BES über eine Extrahierungseinheit, die die Bodenmerkmale aus den übertragenen Sensordaten extrahiert. Diese extrahierten Bodenmerkmale werden dann einer Berechnungseinheit des Backend-Servers BES zugeführt, welcher die aktuelle Fahrzeugposition des Fahrzeuges anhand der extrahierten Bodenmerkmale mittels einer gespeicherten Merkmalskarte bestimmt.

Bei einer weiteren möglichen Ausführungsform des erfindungsgemäßen Systems 1 befinden sich sowohl die Sensoreinheit 2 als auch die Extrahierungseinheit 3 sowie die Berechnungseinheit 4 innerhalb des Fahrzeuges F, sodass das System autonom ohne eine drahtlose Schnittstelle einer Basisstation funktioniert. Bei dieser Ausführungsvariante verfügt das System 1 innerhalb des Fahrzeuges F über leistungsstarke Berechnungseinheiten, die eine Extrahierung und Positionsbestimmung in Echtzeit durchführen können. Darüber hinaus verfügt das System 1 bei dieser Ausführungsvariante über einen relativ großen Datenspeicher zum Speichern einer umfangreichen Merkmalskarte.

Umgekehrt bietet die Verlagerung der Extrahierungseinheit 3 und der Berechnungseinheit 4 innerhalb des Backend-Servers BES den Vorteil, dass das Fahrzeug F selbst eine weniger leistungsstarke Datenverarbeitungseinheit benötigt und auch über geringere Speicherkapazitäten verfügen muss.

Fig. 7 zeigt beispielhaft die Bodenbeschaffenheit eines Fahrbodens auf Rohdatenebene. Fig. 7 zeigt zwei Zeitaufnahmen des Fahrbodens, der von einem Fahrzeug F überfahren wird. Man erkennt in dem Beispiel verschiedene Teerfugen T und einen Teil eines Verkehrsrichtungspfeils, der an seinem hinteren Ende zwei Ecken besitzt.

Fig. 8 zeigt die aus dem Fahrboden extrahierten Bodenmerkmale. Beispielsweise werden bezüglich der Teerfugen T und der beiden Ecken des Verkehrsrichtungspfeils Punkte generiert, die ein spezifisches Muster bilden, wie in Fig. 8 dargestellt. Die in Fig. 8 dargestellten extrahierten Bodenmerkmale können mit einer gespeicherten Merkmalskarte verglichen werden, um eine exakte Fahrposition des Fahrzeuges mit einer Genauigkeit von unter 10 cm zu berechnen.

Mithilfe dieser genauen Fahrzeugposition kann ein Fahrerassistenzsystem des Fahrzeuges hochautomatisierte Fahrfunktionen zur Verfügung stellen. Beim hochautomatisierten Fahren kann der Fahrer des Fahrzeuges F die Verantwortung temporär an das Fahrerassistenzsystem übergeben und sich zeitweise anderen Aufgaben widmen. Bei Auftreten einer problematischen Verkehrssituation kann der Fahrer innerhalb einer sogenannten Übernahmezeit wieder die vollständige Kontrolle über das Fahrzeug übernehmen.

### BEZUGSZEICHEN

- 1.: System
- 2.: Sensoreinheit
- 3.: Extrahierungseinheit
- 4.: Berechnungseinheit

## Patentansprüche

1. Verfahren zum Bestimmen einer Fahrzeugposition eines Fahrzeuges (F) mit mindestens einer Sensoreinheit (2) mit den Schritten:
(a) Erfassen (S1) von Sensordaten eines von dem Fahrzeug (F) befahrenen Fahrbodens mit der mindestens einen Sensoreinheit des Fahrzeugs;
(b) Extrahieren (S2) von Bodenmerkmalen des Fahrbodens aus den erfassten Sensordaten oder aus Belegungsgittern, die auf Basis der Sensordaten berechnet werden;
(bb) Übertragen von den erfassten Sensordaten oder den extrahierten Bodenmerkmalen über eine drahtlose Schnittstelle des Fahrzeugs an einen Backend-Server (BES);
(c) Bestimmen (S3) der aktuellen Fahrzeugposition des Fahrzeuges (F) anhand der extrahierten Bodenmerkmale mittels einer Merkmalskarte, wobei die extrahierten Bodenmerkmale des Fahrbodens zur Bestimmung der aktuellen Fahrzeugposition des Fahrzeuges (F) mit Bodenmerkmalen verglichen werden, die aus der Merkmalskarte entnommen werden,
**dadurch gekennzeichnet, dass** die Bodenmerkmale Bodenmarkierungen und allgemeine Kanteninformationen umfassen, wobei die allgemeinen Kanteninformationen Informationen über Kanten umfassen von: Leitpfosten, Leitplanken, Häusern, Tunneln und Brücken.

2. Verfahren nach Anspruch 1, wobei die Sensordaten Kamerabilder umfassen, die von mindestens einer Fahrzeugkamera während der Fahrt des Fahrzeuges (F) über den Fahrboden erfasst werden.

3. Verfahren nach Anspruch 2, wobei die mindestens eine Sensoreinheit ein Surround View System umfasst, wobei das Surround View System über mehrere Fahrzeugkameras verfügt, die an verschiedenen Stellen an der Karosserie des Fahrzeugs (F) angebracht sind und die Sensordaten Kamerabilder der einzelnen Fahrzeugkameras umfassen.

4. Verfahren nach Anspruch 2 oder 3, wobei die Sensordaten zusätzlich zu den Kamerabildern auch Radardaten oder Daten, die von einem Lidarsystem generiert werden, umfassen und aus den durch die Sensoreinheiten (2) erfassten Sensordaten mindestens ein Belegungsgitter des Fahrbodens in Echtzeit berechnet wird.

5. Verfahren nach einem der vorangehenden Ansprüche 1 bis 4, wobei die erfassten Sensordaten über die drahtlose Schnittstelle an den Backend-Server (BES) übertragen werden, welcher die Bodenmerkmale aus den über die Schnittstelle empfangenen Sensordaten extrahiert und anhand der extrahierten Bodenmerkmale mittels der Merkmalskarte die aktuelle Fahrzeugposition des Fahrzeuges bestimmt.

6. Verfahren nach einem der vorangehenden Ansprüche 1 bis 4, wobei die Bodenmerkmale des Fahrbodens durch eine Datenverarbeitungseinheit des Fahrzeuges (F) extrahiert werden und die extrahierten Bodenmerkmale des Fahrbodens über die drahtlose Schnittstelle an den Backend-Server (BES) übertragen werden, welcher anhand der über die Schnittstelle empfangenen Bodenmerkmale mittels der Merkmalskarte die aktuelle Fahrzeugposition des Fahrzeuges bestimmt.

7. Verfahren nach Anspruch 5 oder 6, wobei der Backend-Server (BES) die durch ihn bestimmte aktuelle Fahrzeugposition des Fahrzeuges über die Schnittstelle an das Fahrzeug zurückmeldet.

8. Verfahren nach einem der vorangehenden Ansprüche 1 bis 4, wobei die Bodenmerkmale des Fahrbodens
durch eine Datenverarbeitungseinheit des Fahrzeuges (F) extrahiert werden und die
extrahierten Bodenmerkmale des Fahrbodens zur Bestimmung der aktuellen Fahrzeugposition des Fahrzeuges (F) mit den Bodenmerkmalen verglichen werden, die von dem Backend-Server (BES) aus der Merkmalskarte entnommen und über die drahtlose Schnittstelle an die Datenverarbeitungseinheit des Fahrzeuges (F) übertragen werden.

9. Verfahren nach einem der vorangehenden Ansprüche 1 bis 8, wobei die aktuelle Fahrzeugposition des Fahrzeuges (F) anhand der extrahierten Bodenmerkmale mittels der Merkmalskarte in einem eingeschränkten Suchraum bestimmt wird, wobei der Suchraum insbesondere in der Merkmalskarte durch eine grobe Bestimmung der Fahrzeugposition des Fahrzeuges (F) auf Basis von GPS-Signalen, Mobilfunksignalen und/oder durch Odometrie eingeschränkt wird.

10. Verfahren nach einem der vorangehenden Ansprüche 1 bis 8, wobei die Merkmalskarte eine in einer Datenbank gespeicherte globale Merkmalskarte ist, wobei der Backend-Server (BES) Zugriff auf die Merkmalskarte hat.

11. Verfahren nach einem der vorangehenden Ansprüche 1 bis 10, wobei die Merkmalskarte auf Basis von Satellitenbildern generiert und/oder aktualisiert wird.

12. Verfahren nach einem der vorangehenden Ansprüche 1 bis 11, wobei die aus den Sensordaten und/oder Belegungsgittern extrahierten Bodenmerkmale des Fahrbodens zusätzlich
- Bodenmarkierungen, insbesondere Fahrstreifen, und Bodenverkehrszeichen,
- Bodenfugen, insbesondere Teerfugen,
- Fahrbahnrillen, Fahrbodentexturen und
- Kanaldeckel umfassen.

13. Verfahren nach einem der vorangehenden Ansprüche 1 bis 12,
wobei die Fahrzeugposition des Fahrzeuges (F) mit einer Positionsgenauigkeit von bis zu unter 10 cm genau bestimmt wird.

14. System (1) zur Bestimmung einer Fahrzeugposition eines Fahrzeuges (F) mit:
- mindestens einer Sensoreinheit (2), die Sensordaten eines von dem Fahrzeug (F) befahrenen Fahrbodens liefert;
- einer Extrahierungseinheit (3), die Bodenmerkmale aus den erfassten Sensordaten und/oder aus Belegungsgittern extrahiert, die auf Basis von Sensordaten berechnet sind;
- einer drahtlosen Schnittstelle des Fahrzeugs, die zum Übertragen von den erfassten Sensordaten oder den extrahierten Bodenmerkmalen über die drahtlose Schnittstelle an einen Backend-Server (BES) eingerichtet ist und mit
- einer Berechnungseinheit (4), die eine aktuelle Fahrzeugposition des Fahrzeuges bestimmt, indem die extrahierten Bodenmerkmale verglichen werden mit Bodenmerkmalen, die aus einer gespeicherten Merkmalskarte entnommen werden,
**dadurch gekennzeichnet, dass**:
die Bodenmerkmale Bodenmarkierungen und allgemeine Kanteninformationen umfassen, wobei die allgemeinen Kanteninformationen Informationen über Kanten umfassen von: Leitpfosten, Leitplanken, Häusern, Tunneln und Brücken.

## Claims

1. Method for determining a vehicle position of a vehicle (F) having at least one sensor unit (2), comprising the steps of:
(a) capturing (S1) sensor data from a driving surface driven on by the vehicle (F) by means of the at least one sensor unit of the vehicle;
(b) extracting (S2) surface features of the driving surface from the captured sensor data or from occupancy grids computed on the basis of the sensor data;
(bb) transmitting the captured sensor data or the extracted surface features via a wireless interface of the vehicle to a backend server (BES);
(c) determining (S3) the current vehicle position of the vehicle (F) on the basis of the extracted surface features by means of a feature map, wherein the extracted surface features of the driving surface are compared with surface features taken from the feature map in order to determine the current vehicle position of the vehicle (F),
**characterized in that**
the surface features comprise surface markings and general edge information, wherein the general edge information comprises information about edges from: delineator posts, crash barriers, houses, tunnels and bridges.

2. Method according to Claim 1,
wherein the sensor data comprise camera images captured by at least one vehicle camera while the vehicle (F) travels over the driving surface.

3. Method according to Claim 2,
wherein the at least one sensor unit comprises a surround view system, wherein the surround view system has multiple vehicle cameras mounted at different points on the bodywork of the vehicle (F) and the sensor data comprise camera images from the individual vehicle cameras.

4. Method according to Claim 2 or 3,
wherein the sensor data also comprise, in addition to the camera images, radar data or data generated by a lidar system and at least one occupancy grid of the driving surface is computed in real time from the sensor data captured by the sensor units (2).

5. Method according to one of the preceding Claims 1 to 4, wherein the captured sensor data are transmitted via the wireless interface to the backend server (BES), which extracts the surface features from the sensor data received via the interface and takes the extracted surface features as a basis for determining the current vehicle position of the vehicle by means of the feature map.

6. Method according to one of the preceding Claims 1 to 4, wherein the surface features of the driving surface are extracted by a data processing unit of the vehicle (F) and the extracted surface features of the driving surface are transmitted via the wireless interface to the backend server (BES), which takes the surface features received via the interface as a basis for determining the current vehicle position of the vehicle by means of the feature map.

7. Method according to Claim 5 or 6,
wherein the backend server (BES) reports the current vehicle position it has determined for the vehicle back to the vehicle via the interface.

8. Method according to one of the preceding Claims 1 to 4, wherein the surface features of the driving surface are extracted by a data processing unit of the vehicle (F) and the extracted surface features of the driving surface are compared with the surface features taken from the feature map by the backend server (BES) and transmitted via the wireless interface to the data processing unit of the vehicle (F) in order to determine the current vehicle position of the vehicle (F).

9. Method according to one of the preceding Claims 1 to 8, wherein the current vehicle position of the vehicle (F) is determined on the basis of the extracted surface features by means of the feature map in a limited search space, wherein the search space is limited in particular in the feature map by a coarse determination of the vehicle position of the vehicle (F) on the basis of GPS signals, mobile radio signals and/or by odometry.

10. Method according to one of the preceding Claims 1 to 8, wherein the feature map is a global feature map stored in a database, wherein the backend server (BES) has access to the feature map.

11. Method according to one of the preceding Claims 1 to 10, wherein the feature map is generated and/or updated on the basis of satellite images.

12. Method according to one of the preceding Claims 1 to 11, wherein the surface features of the driving surface that are extracted from the sensor data and/or occupancy grids additionally comprise
- surface markings, in particular lanes, and surface traffic signs,
- surface joints, in particular tar joints,
- road grooves, driving surface textures and
- manhole covers.

13. Method according to one of the preceding Claims 1 to 12, wherein the vehicle position of the vehicle (F) is determined with a positional accuracy of up to within 10 cm accurate.

14. System (1) for determining a vehicle position of a vehicle (F), having:
- at least one sensor unit (2) that delivers sensor data from a driving surface driven on by the vehicle (F);
- an extraction unit (3) that extracts surface features from the captured sensor data and/or from occupancy grids computed on the basis of sensor data;
- a wireless interface of the vehicle, configured to transmit the captured sensor data or the extracted surface features via the wireless interface to a backend server (BES) and having
- a computation unit (4) that determines a current vehicle position of the vehicle by virtue of the extracted surface features being compared with surface features taken from a stored feature map,
**characterized in that**:
the surface features comprise surface markings and general edge information, wherein the general edge information comprises information about edges from: delineator posts, crash barriers, houses, tunnels and bridges.

## Revendications

1. Procédé de détermination d'une position de véhicule d'un véhicule (F) avec au moins une unité de détection (2), comprenant les étapes suivantes :
(a) acquisition (S1) de données de capteur d'un sol de déplacement parcouru par le véhicule (F) avec l'au moins une unité de détection du véhicule ;
(b) extraction (S2) de caractéristiques de sol du sol parcouru à partir des données de capteur acquises ou à partir de grilles d'occupation qui ont été calculées sur la base des données de capteur ;
(bb) transmission des données de capteur acquises ou des caractéristiques de sol extraites à un serveur principal (BES) par le biais d'une interface sans fil du véhicule ;
(c) détermination (S3) de la position de véhicule actuelle du véhicule (F) à l'aide des caractéristiques de sol extraites au moyen d'une carte de caractéristiques, les caractéristiques de sol extraites du sol de déplacement, en vue de déterminer la position de véhicule actuelle du véhicule (F), étant comparées à des caractéristiques de sol qui sont prélevées de la carte de caractéristiques,
**caractérisé en ce que**
les caractéristiques de sol comprennent des marquages de sol et des informations d'arêtes générales, les informations d'arêtes générales comprenant des informations à propos des arêtes de : délinéateurs, glissières de sécurité, maisons, tunnels et ponts.

2. Procédé selon la revendication 1, les données de capteur comprenant des images de caméra qui sont acquises par au moins une caméra de véhicule pendant le déplacement du véhicule (F) au-dessus du sol de déplacement.

3. Procédé selon la revendication 2, l'au moins une unité de détection disposant d'un système de vision périphérique, le système de vision périphérique disposant de plusieurs caméras de véhicule qui sont montées en différents endroits sur la carrosserie du véhicule (F) et les données de capteur comprenant des images de caméra des caméras de véhicule individuelles.

4. Procédé selon la revendication 2 ou 3, les données de capteur, en plus des images de caméra, comprenant également des données de radar ou des données qui sont générées par un système lidar et au moins une grille d'occupation du sol de déplacement étant calculée en temps réel à partir des données de capteur acquises par les unités de détection (2).

5. Procédé selon l'une des revendications 1 à 4, les données de capteur acquises étant transmises par le biais de l'interface sans fil au serveur principal (BES) qui extrait les caractéristiques de sol des données de capteur reçues par le biais de l'interface et, à l'aide des caractéristiques de sol extraites, détermine la position de véhicule actuelle du véhicule au moyen de la carte de caractéristiques.

6. Procédé selon l'une des revendications précédentes 1 à 4, les caractéristiques de sol du sol de déplacement étant extraites par une unité de traitement de données du véhicule (F) et les caractéristiques de sol extraites du sol de déplacement étant transmises par le biais de l'interface sans fil au serveur principal (BES) qui, à l'aide des caractéristiques de sol reçues par le biais de l'interface, détermine la position de véhicule actuelle du véhicule au moyen de la carte de caractéristiques.

7. Procédé selon la revendication 5 ou 6, le serveur principal (BES) renvoyant au véhicule par le biais de l'interface la position de véhicule actuelle du véhicule déterminé par lui.

8. Procédé selon l'une des revendications précédentes 1 à 4, les caractéristiques de sol du sol de déplacement étant extraites par une unité de traitement de données du véhicule (F) et les caractéristiques de sol extraites du sol de déplacement, en vue de déterminer la position de véhicule actuelle du véhicule (F), étant comparées aux caractéristiques de sol qui sont prélevées de la carte de caractéristiques par le serveur principal (BES) et transmises à l'unité de traitement de données du véhicule (F) par le biais de l'interface.

9. Procédé selon l'une des revendications précédentes 1 à 8, la position de véhicule actuelle du véhicule (F) étant déterminée à l'aide des caractéristiques de sol extraites au moyen de la carte de caractéristiques dans un espace de recherche restreint, l'espace de recherche étant notamment restreint dans la carte de caractéristiques par une détermination grossière de la position de véhicule actuelle du véhicule (F) sur la base de signaux GPS, de signaux de radiocommunication mobile et/ou par odométrie.

10. Procédé selon l'une des revendications précédentes 1 à 8, la carte de caractéristiques étant une carte de caractéristiques globale enregistrée dans une base de données, le serveur principal (BES) ayant accès à la carte de caractéristiques.

11. Procédé selon l'une des revendications précédentes 1 à 10, la carte de caractéristiques étant générée et/ou actualisée sur la base d'images satellitaires.

12. Procédé selon l'une des revendications précédentes 1 à 11, les caractéristiques de sol du sol de déplacement extraites des données de capteur et/ou des grilles d'occupation comprenant en plus
- des marquages au sol, notamment des bandes de circulation, et des signaux de circulation au sol,
- des joints de sol, notamment des joints de goudron,
- des rainures de la chaussée, des textures du sol de déplacement et
- des plaques d'égout.

13. Procédé selon l'une des revendications précédentes 1 à 12, la position de véhicule du véhicule (F) étant déterminée avec une précision de position jusqu'à moins de 10 cm.

14. Système (1) de détermination d'une position de véhicule d'un véhicule (F) comprenant :
- au moins une unité de détection (2), laquelle délivre des données de capteur d'un sol de déplacement parcouru par le véhicule (F) ;
- une unité d'extraction (3) qui extrait des caractéristiques de sol à partir des données de capteur acquises et/ou à partir de grilles d'occupation qui sont calculées sur la base des données de capteur ;
- une interface sans fil du véhicule qui est conçue pour la transmission des données de capteur acquises ou des caractéristiques de sol extraites à un serveur principal (BES) par le biais de l'interface sans fil et comprenant
- une unité de calcul (4) qui détermine une position de véhicule actuelle du véhicule en comparant les caractéristiques de sol extraites à des caractéristiques de sol qui sont prélevées d'une carte de caractéristiques enregistrée, **caractérisé en ce que**
les caractéristiques de sol comprennent des marquages de sol et des informations d'arêtes générales, les informations d'arêtes générales comprenant des informations à propos des arêtes de : délinéateurs, glissières de sécurité, maisons, tunnels et ponts.
